# FASCICULE DE BREVET EUROPEEN

(11) **EP 3 414 110 B1**
(45) Date de publication et mention de la délivrance du brevet: **25.03.2020**
(21) Numéro de dépôt: 17712185.2
(22) Date de dépôt: 12.01.2017
(51) Int. Cl.: B60B 7/00, B60B 7/04, B60T 5/00, F16D 65/00, B60B 7/06, F16D 65/847

(54) **ENJOLIVEUR AERODYNAMIQUE FILTRANT D'UNE ROUE D'UN VEHICULE**
FILTERNDE AERODYNAMISCHE RADKAPPE FÜR EIN FAHRZEUGRAD
FILTERING AERODYNAMIC HUBCAP FOR VEHICLE WHEEL

(30) Priorité: 11.02.2016 FR 1651089
(43) Date de publication de la demande: 19.12.2018
(73) Titulaire: PSA AUTOMOBILES S.A., 78300 Poissy (FR)
(72) Inventeur: NUBOER, Robert, 91190 St Aubin (FR); COPIN, Xavier, 92240 Malakoff (FR); SERVANTON, Dominique, 94240 L'Hay les Roses (FR)
(86) Numéro de dépôt international: PCT/FR2017/050064
(87) Numéro de publication internationale: WO 2017/137673

(56) Documents cités:
- DE-A1- 4 008 333
- DE-A1-102013 222 044
- DE-U1-202005 004 045
- US-B1- 6 796 406

## Description

L'invention concerne un enjoliveur aérodynamique filtrant d'une roue d'un véhicule, notamment automobile.

On connait du document DE102013222044, un enjoliveur aérodynamique d'une roue d'un véhicule, notamment automobile, la roue présentant une jante cylindrique et un disque de roue comportant des orifices de ventilation, l'enjoliveur comportant une partie correspondante à la partie externe de la présente invention.

Afin d'éviter d'une part la dissipation dans l'air ambiant des particules issues des plaquettes de freins et d'autre part les salissures sur les roues des véhicules occasionnées par ces mêmes particules, il est connu d'intégrer des filtres à poussières à proximité des plaquettes de freins.

Il est en outre connu du document US 2015/0091367 un filtre à particules de freinage fixé sur la jante d'une roue d'un véhicule. Ce filtre comprend une grille filtrante fixée à l'intérieur de la roue correspondante du véhicule.

Cependant, ce filtre à particules n'est pas adapté pour optimiser la collecte des particules de freinage. Une portion de ces particules est donc susceptible d'être disséminée dans l'atmosphère et/ou de salir la roue correspondante du véhicule.

La présente invention a pour but de pallier les inconvénients ci-dessus de l'art antérieur.

Pour atteindre ce but, l'invention concerne un enjoliveur aérodynamique filtrant d'une roue d'un véhicule, notamment automobile, la roue présentant une jante cylindrique et un disque de roue comportant des orifices de ventilation, caractérisé en ce que l'enjoliveur comprend une partie interne formée par une turbine fixée coaxialement dans la jante en vis-à-vis du disque de roue pour dévier le flux d'air latéral vers l'extérieur de la roue au travers d'ajourages radiaux définis par les pales de la turbine lors de l'entrainement en rotation de la roue, une partie externe fixée coaxialement dans la jante et comprenant des ajourages radiaux définis au moins par des branches disposées radialement entre une portion centrale et un bord périphérique de cette partie externe pour permettre au flux d'air ayant traversé les ajourages radiaux de la turbine de sortir de la roue au travers des ajourages radiaux de la partie externe lors de son entrainement en rotation, l'enjoliveur comprenant en outre au moins un filtre disposé coaxialement entre les parties interne et externe pour filtrer les particules en suspension dans le flux d'air traversant la roue lors de son entrainement en rotation.

Selon une autre particularité, la partie interne est fixée par une portion centrale de celle-ci au disque de roue.

Selon une autre particularité, la partie externe est formée par une turbine identique à la turbine formant la partie interne et fixée au disque de roue, et les branches radiales sont formées par les pales de la partie externe.

Selon une autre particularité, les branches radiales de la partie externe définissent plusieurs secteurs distincts régulièrement espacés autour de la portion centrale de la partie externe et en ce que chaque secteur comprend dans celui-ci des pales destinées à canaliser le flux d'air sortant de la roue au travers des ajourages radiaux formés entre les pales et les branches radiales de chaque secteur concentrique.

Selon une autre particularité, le filtre est annulaire et présente un diamètre permettant de recouvrir la partie interne.

L'invention concerne également une roue de véhicule, notamment automobile, comportant un enjoliveur aérodynamique filtrant tel que décrit précédemment.

L'invention concerne également un véhicule, notamment automobile, dont chacune de ses roues est telle que décrite précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels :
- La figure 1 représente une vue éclatée en perspective d'un enjoliveur aérodynamique filtrant selon un premier mode de réalisation ;
- La figure 2 représente une vue en perspective de l'enjoliveur de la figure 1 monté sur une roue ;
- La figure 3 représente une vue de face d'un second mode de réalisation de l'invention d'un enjoliveur aérodynamique filtrant monté sur une roue.

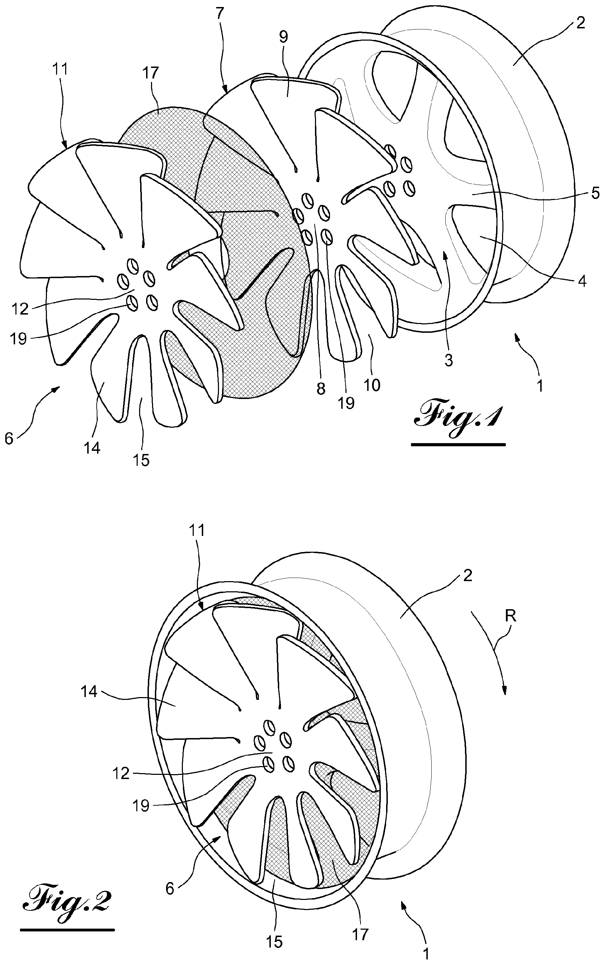

En référence aux figures 1 à 3, la référence 1 désigne une roue pouvant comporter un pneumatique pour former un ensemble roue/pneumatique d'un véhicule, notamment automobile.

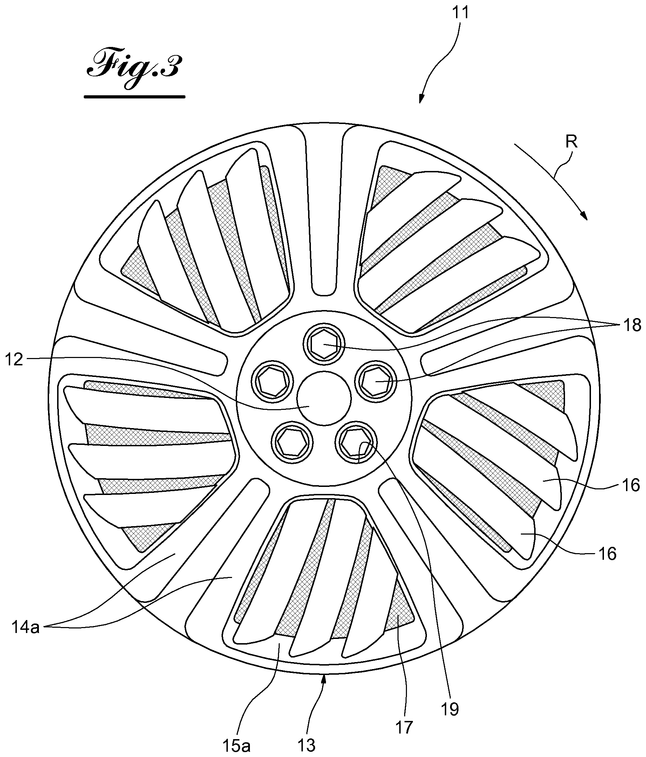

La roue 1 du véhicule est constituée, de manière classique, d'une jante 2 et d'un disque de roue central 3. La jante 2 est le cercle profilé en une ou deux parties, qui est fixée perpendiculairement au disque de roue 3. Le disque de roue 3 est ajouré pour réduire son poids et créer, pendant la marche du véhicule (illustrée par la flèche R des figures 2 et 3), un flux d'air axial pour le refroidissement des freins : le disque de roue 3 comprend des orifices de ventilation 4 formés entre des branches 5, qui sont disposées radialement entre la portion centrale de la roue 1 et le bord périphérique de la jante 2.

Selon l'invention, la roue comprend également un enjoliveur aérodynamique filtrant 6 comprenant une partie interne 7 formée par une turbine. Cette turbine 7 est fixée dans la jante 2 de manière coaxiale en vis-à-vis du disque de roue 3. Préférentiellement, la turbine 7 est fixée par une portion centrale 8 de celle-ci au disque de roue 3 à l'aide d'écrous de roue 18, traversant des orifices 19 prévus à cet effet dans la portion centrale 8 de la turbine 7. Les pales 9 de la turbine, s'étendant radialement du centre de la turbine 8 vers son bord périphérique externe, sont inclinées par rapport au plan général de la roue 1, de manière à dévier le flux d'air latéral et amplifier le flux d'air axial dirigé vers l'extérieur de la roue 1 lors de son entraînement en rotation, au travers d'ajourages radiaux 10 définis entre les pales 9 de la turbine 7.

De manière préférentielle, la turbine 7 formant la partie interne de l'enjoliveur 6 est réalisée en matière plastique par moulage par injection.

L'enjoliveur aérodynamique filtrant 6 comprend également une partie externe 11 fixée de manière coaxiale dans la jante 2. De manière à permettre au flux d'air axial, amplifié par la partie interne 7 de l'enjoliveur 6 lors de l'entrainement en rotation de la roue correspondante 1, de sortir de cette roue, la partie externe 11 comprend également des ajourages radiaux 15, 15a définis au moins par des branches radiales 14, 14a dont les structures seront précisées ci-dessous selon deux modes de réalisation de l'invention. Ces structures, en plus de permettre au flux d'air de sortir de la roue 1, le canalise dans les ajourages radiaux 15, 15a de la partie externe 11. La partie externe 11 est fixée par une portion centrale 12 de celle-ci au disque de roue 3 à l'aide des écrous de roue 18, traversant des orifices 19 prévus à cet effet dans la portion centrale 12 de la partie externe 11.

Dans un premier mode de réalisation de l'invention représenté aux figures 1 et 2, la partie externe 11 est formée par une turbine identique à la turbine formant la partie interne 7. La turbine de la partie externe 11 est fixée au disque de roue 3 via les écrous de roue 18 traversant des orifices 19 de la turbine de la partie externe 11, et les ajourages radiaux 15 sont définis par les pales 14 de la turbine 11 s'étendant radialement du centre 12 de la turbine vers son bord périphérique externe. Ces pales 14 sont inclinées par rapport au plan général de la roue 1, de manière à diriger le flux d'air axial vers l'extérieur de la roue 1 lors de son entraînement en rotation, au travers des ajourages radiaux 15 définis par les pales 14 de la turbine de la partie externe 11.

Dans un second mode de réalisation de l'invention représenté à la figure 3, les ajourages radiaux 15 de la partie externe 11 sont définis par des branches 14 disposées radialement entre une portion centrale 12 et un bord périphérique externe de la partie externe 11. Ces branches radiales 14a définissent plusieurs secteurs distincts 13 régulièrement espacés autour de la portion centrale 12 de la partie externe 11. A titre d'exemple, cinq secteurs 13 sont représentés sur la figure 3.

En outre, chaque secteur 13 comprend dans celui-ci des pales 16 destinées à canaliser le flux d'air axial sortant de la roue 1 au travers des ajourages radiaux 15a formés entre les pales 16 et les branches radiales 14a de chaque secteur 13 concentrique à la portion centrale 12. A titre d'exemple, trois pales 16 par secteur 13 sont représentées sur la figure 3.

Afin de canaliser le flux d'air axial, les pales 16 de la partie externe 11 peuvent être profilées en « aile d'avion ». De préférence, le profil « aile d'avion » des pales 16 est un profil de type « CLARK Y », de forme relativement simple, très efficace à petite échelle. Le profil « CLARK Y » est un profil aérodynamique particulier, très largement utilisé dans la construction aéronautique et le modélisme. En outre, les pales sont inclinées par rapport au plan général de l'enjoliveur 6, c'est-à-dire par rapport au plan général de la roue 1.

En référence à nouveau aux figures 1 à 3, l'enjoliveur aérodynamique filtrant 6 comprend également au moins un filtre 17 disposé de manière coaxiale entre les parties interne 7 et externe 11 de l'enjoliveur 6. Dans les modes de réalisations représentés sur les figures, un seul filtre 17 est installé. Ce filtre est préférentiellement en matériau mousse, tel que les filtres à air des moteurs à combustion interne. Comme représenté sur les figures, le filtre 17 est annulaire et est pris en sandwich entre les parties interne 7 et externe 11 de l'enjoliveur 6. En outre, il présente un diamètre sensiblement identique au disque de roue 3 de manière à recouvrir la partie interne 7 de l'enjoliveur 6.

L'enjoliveur aérodynamique filtrant 6 selon l'invention, par la présence d'au moins un filtre en mousse 17, permet de débarrasser le flux d'air traversant la roue correspondante 1 des particules de freinage en suspension, évitant ainsi les salissures sur l'enjoliveur 6 et la roue 1 et le rejet de ces particules dans l'atmosphère. En outre, par la présence des parties interne 7 et externe 11 aérodynamiques, le flux d'air latéral est dévié et canalisé dans la roue 1 vers l'extérieur pour ressortir de cette dernière, permettant non seulement de favoriser le refroidissement des freins, mais surtout d'optimiser le piégeage dans le filtre 17 des particules de freinage emportées dans le flux d'air traversant la roue 1.

La configuration telle que décrite n'est pas limitée au mode de réalisation décrit précédemment et représenté sur les figures. Elle n'a été donnée qu'à titre d'exemple non limitatif. De multiples modifications peuvent être apportées sans pour autant sortir du cadre de l'invention. En particulier, on pourrait imaginer un système classique de fixation de l'enjoliveur 6 sur le bord de la jante 2 de la roue 1, si le dessin des bords périphériques externes respectivement des parties interne 7 et externe 11 le permet. Par exemple et de manière non limitative, un système de fixation classique comprend une pluralité de pattes de fixations solidaires des bords périphériques externes respectivement des parties interne 7 et externe 11 de l'enjoliveur et régulièrement espacées, ces pattes étant destinées à être clipsées sur le bord de la jante pour permettre l'encastrement de l'enjoliveur dans la jante 2. On pourrait également imaginer un enjoliveur 6 dont la partie interne 7 est identique à la partie externe 11 selon le second mode de réalisation. Enfin, l'enjoliveur 6 peut comprendre plusieurs filtres 17 superposés de manière coaxiale et disposés entre les parties interne 7 et externe 11 de l'enjoliveur 6 selon l'invention.

## Revendications

1. Enjoliveur aérodynamique filtrant (6) d'une roue (1) d'un véhicule, notamment automobile, la roue présentant une jante cylindrique (2) et un disque de roue (3) comportant des orifices de ventilation (4), l'enjoliveur comprenant une partie interne (7) formée par une turbine fixée coaxialement dans la jante (2) en vis-à-vis du disque de roue (3) pour dévier le flux d'air latéral vers l'extérieur de la roue (1) au travers d'ajourages radiaux (10) définis par les pales (9) de la turbine lors de l'entrainement en rotation de la roue (1), une partie externe (11) fixée coaxialement dans la jante (2) et comprenant des ajourages radiaux (15, 15a) définis au moins par des branches (14, 14a) disposées radialement entre une portion centrale (12) et un bord périphérique de cette partie externe (11) pour permettre au flux d'air ayant traversé les ajourages radiaux (10) de la turbine (7) de sortir de la roue (1) au travers des ajourages radiaux (15) de la partie externe (11) lors de son entrainement en rotation, l'enjoliveur (6) comprenant en outre au moins un filtre (17) disposé coaxialement entre les parties interne (7) et externe (11) pour filtrer les particules en suspension dans le flux d'air traversant la roue (1) lors de son entrainement en rotation.

2. Enjoliveur aérodynamique filtrant (6) selon la revendication 1, **caractérisé en ce que** la partie interne (7) est fixée par une portion centrale (8) de celle-ci au disque de roue (3).

3. Enjoliveur aérodynamique filtrant selon la revendication 1 ou 2, **caractérisé en ce que** la partie externe (11) est formée par une turbine identique à la turbine formant la partie interne et fixée au disque de roue (3), et les branches radiales (14) sont formées par les pales de la partie externe (11).

4. Enjoliveur aérodynamique filtrant (6) selon la revendication 1 ou 2, **caractérisé en ce que** les branches radiales (14a) de la partie externe (11) définissent plusieurs secteurs distincts (13) régulièrement espacés autour de la portion centrale (12) de la partie externe (11) et **en ce que** chaque secteur (13) comprend dans celui-ci des pales (16) destinés à canaliser le flux d'air sortant de la roue (1) au travers des ajourages radiaux (15a) formés entre les pales (16) et les branches radiales (14a) de chaque secteur concentrique (13).

5. Enjoliveur aérodynamique filtrant (6) selon l'une quelconque des revendications 1 à 4, **caractérisé en ce que** le filtre (17) est annulaire et présente un diamètre permettant de recouvrir la partie interne (7).

6. Roue de véhicule (1), notamment automobile, comportant un enjoliveur aérodynamique filtrant (6) selon l'une quelconque des revendications 1 à 5.

7. Véhicule, notamment automobile, **caractérisé en ce que** chacune de ses roues (1) est conforme à la revendication 6.

## Patentansprüche

1. Filternde aerodynamische Radkappe (6) eines Rads (1) eines Fahrzeugs, insbesondere eines Kraftfahrzeugs, wobei das Rad eine zylindrische Felge (2) und eine Radscheibe (3) aufweist, die Belüftungsöffnungen (4) umfasst, wobei die Radkappe einen internen Teil (7) umfasst, der aus einer Turbine gebildet ist, die koaxial in der Felge (2) in Gegenüberlage zu der Radscheibe (3) befestigt ist, um den seitlichen Luftstrom nach außerhalb des Rads (1) durch radiale Durchbrüche (10), die von den Blättern (9) der Turbine bei dem Antreiben in Drehung des Rads (1) definiert werden, abzuleiten, einen externen Teil (11), der koaxial in der Felge (2) befestigt ist und radiale Durchbrüche (15, 15a) umfasst, die mindestens von Schenkeln (14, 14a) definiert sind, die radial zwischen einem zentralen Abschnitt (12) und einem Umfangsrand dieses externen Teils (11) angeordnet sind, um es dem Luftstrom, der die radialen Durchbrüche (10) der Turbine (7) durchquert hat, zu erlauben, aus dem Rad (1) durch radiale Durchbrüche (15) des externen Teils (11) bei seinem Antreiben in Drehung auszutreten, wobei die Radkappe (6) außerdem mindestens ein Filter (17) umfasst, das koaxial zwischen dem internen Teil (7) und dem externen Teil (11) angeordnet ist, um die Partikel in Suspension in dem Luftstrom, der das Rad (1) bei seinem Antreiben in Drehung durchquert, zu filtern.

2. Aerodynamische filternde Radkappe (6) nach Anspruch 1, **dadurch gekennzeichnet, dass** der interne Teil (7) durch einen zentralen Abschnitt (8) dieses an der Radscheibe (3) befestigt ist.

3. Aerodynamische filternde Radkappe nach Anspruch 1 oder 2, **dadurch gekennzeichnet, dass** der externe Teil (11) von einer Turbine gebildet ist, die mit der Turbine identisch ist, die den internen Teil bildet, und an der Radscheibe (3) befestigt ist, und die radialen Schenkel (14) durch die Blättern des externen Teils (11) gebildet sind.

4. Aerodynamische filternde Radkappe (6) nach Anspruch 1 oder 2, **dadurch gekennzeichnet, dass** die radialen Schenkel (14a) des externen Teils (11) mehrere getrennte Sektoren (13) definieren, die regelmäßig um den zentralen Abschnitt (12) des externen Teils (11) beabstandet sind, und dass jeder Sektor (13) darin Blätter (16) umfasst, die dazu bestimmt sind, den Luftstrom, der aus dem Rad (1) austritt, durch radiale Durchbrüche (15a), die zwischen den Blättern (16) und den radialen Schenkeln (14a) jedes konzentrischen Sektors (13) gebildet sind, zu kanalisieren.

5. Aerodynamische filternde Radkappe (6) nach einem der Ansprüche 1 bis 4, **dadurch gekennzeichnet, dass** das Filter (17) ringförmig ist und einen Durchmesser aufweist, der es erlaubt, den internen Teil (7) abzudecken.

6. Fahrzeugrad (1), insbesondere Kraftfahrzeugrad, das eine aerodynamische filternde Radkappe (6) nach einem der Ansprüche 1 bis 5 umfasst.

7. Fahrzeug, insbesondere Kraftfahrzeug, **dadurch gekennzeichnet, dass** jedes seiner Räder (1) Anspruch 6 entspricht.

## Claims

1. A filtering aerodynamic hubcap (6) of a wheel (1) of a vehicle, in particular a motor vehicle, the wheel having a cylindrical rim (2) and a wheel disk (3) comprising ventilation openings (4), the hubcap including an inner part (7) formed by a turbine attached coaxially in the rim (2) opposite the wheel disk (3) for diverting the flow of lateral air towards the outside of the wheel (1) through radial apertures (10) defined by the blades (9) of the turbine during the entrainment in rotation of the wheel (1), an outer part (11) attached coaxially in the rim (2) and including radial apertures (15, 15a) defined at least by branches (14, 14a) disposed radially between a central portion (12) and a peripheral edge of this outer part (11) so as to permit the flow of air, having passed through the radial apertures (10) of the turbine (7), to exit the wheel (1) through radial apertures (15) of the outer part (11) during its entrainment in rotation, the hubcap (6) further including at least one filter (17) disposed coaxially between the inner (7) and outer (11) parts so as to filter the particles in suspension in the flow of air passing through the wheel (1) during its entrainment in rotation.

2. The filtering aerodynamic hubcap (6) according to Claim 1, **characterized in that** the inner part (7) is attached by a central position (8) thereof to the wheel disk (3).

3. The filtering aerodynamic hubcap according to Claim 1 or 2, **characterized in that** the outer part (11) is formed by a turbine identical to the turbine forming the inner part and attached to the wheel disk (3), and the radial branches (14) are formed by the blades of the outer part (11).

4. The filtering aerodynamic hubcap (6) according to Claim 1 or 2, **characterized in that** the radial branches (14a) of the outer part (11) define several distinct sectors (13) regularly spaced around the central portion (12) of the outer part (11) and **in that** each sector (13) includes in it blades (16) intended to channel the flow of air exiting the wheel (1) through radial apertures (15a) formed between the blades (16) and the radial branches (14a) of each concentric sector (13).

5. The filtering aerodynamic hubcap (6) according to any one of Claims 1 to 4, **characterized in that** the filter (17) is annular and presents a diameter permitting the inner part (7) to be covered.

6. A wheel (1) of a vehicle, in particular a motor vehicle, comprising a filtering aerodynamic hubcap (6) according to any one of Claims 1 to 5.

7. A vehicle, in particular a motor vehicle, **characterized in that** each of its wheel (1) is in accordance with Claim 6.
